# EUROPÄISCHE PATENTSCHRIFT

(11) **EP 1 615 007 B1**
(45) Veröffentlichungstag und Bekanntmachung des Hinweises auf die Patenterteilung: **04.04.2012**
(21) Anmeldenummer: 05012324.9
(22) Anmeldetag: 08.06.2005
(51) Int. Cl.: G01F 23/284

(54) **Füllstandmessungs-Antennenanordnung für Radar-Füllstandmessgeräte**
Antenna assembly for radar level measuring device
Système d'antenne pour des dispositifs de mesure de niveau à radar

(30) Priorität: 07.07.2004 DE 102004033033
(43) Veröffentlichungstag der Anmeldung: 11.01.2006
(73) Patentinhaber: VEGA Grieshaber KG, 77709 Wolfach (DE)
(72) Erfinder: Lenk, Fritz, 77761 Schiltach (DE)
(74) Vertreter: Göhring, Robert

(56) Entgegenhaltungen:
- EP-A- 0 444 834
- EP-A2- 0 809 324
- DE-A1- 10 242 500
- US-A- 4 210 023
- US-A- 5 926 080
- US-B1- 6 538 598

## Beschreibung

Die Erfindung bezieht sich auf eine Füllstandmessungs-Antennenanordnung für ein Radar-Füllstandmessgerät mit den oberbegrifflichen Merkmalen des Patentanspruchs 1.

Aus EP 1 058 341 A1 ist zur Füllstandmessung eine Anordnung aus einem Hohlleiter zur Übertragung von Mikrowellen und einer Antenne am vorderseitigen Endabschnitt des Hohlleiters bekannt. Diese Anordnung besteht aus einem einteiligen Bauelement mit einem zum vorderseitigen, die Wellen in Richtung eines Schüttguts abstrahlenden Endabschnitt vergrößerten Durchmesser. Während der Hohlleiter mit einem geringeren Durchmesser monomodig ist, ist der vorderseitige Antennenabschnitt mit dem größeren Durchmesser mehrmodenfähig. Im Übergangsbereich vom Hohlleiter zum Antennenkörper ist in deren Hohlraum ein Querschnittsanpasser als eine Art Wellenadapter eingesetzt. Der Querschnittsanpasser ist so dimensioniert, dass er von der mehrmodenfähigen Antenne keine oder nur in unwesentlichem Maße höhere Moden als der Grundmode entstehen lässt, welche über den Hohlleiter zu einem Gehäuse mit einer Auswerteelektronik zurückgeführt werden. Der Querschnittsanpasser ist als Vollkörper aus einem dielektrischen Vollkörper ausgebildet. In Richtung der Vorderseite ragt er spitz zulaufend in den Raum des Antennenkörpers hinein. In Richtung des Hohlleiters ragt der Querschnittsanpasser entweder spitz zulaufend in den Hohlleiter hinein oder als Vollkörper mit einer flachen Übergangswandung in den Hohlleiter hinein.

Diese Anordnung ermöglicht eine Übertragung einer Mikro- bzw. Radarwelle von einem Gehäuse mit einer geeigneten Elektronik über üblicherweise einen Koaxialstecker und eine Einkopplungseinrichtung sowie den Hohlleiter zu der eigentlichen Antenne. Als Antenne sind Horn-, Parabol- und Stabantennen einsetzbar. Ein vorderseitiger Abschnitt des Hohlleiters ist dabei zugleich als Befestigungselement zum Befestigen der Gesamtanordnung in einer Behältniswandung ausgebildet. Die Befestigung in der Behältniswandung erfolgt so, dass die Antenne in das Behältnis hinein ragt, um Mikro- bzw. Radarwellen in Richtung eines Füllguts abzustrahlen und von der Oberfläche des Füllguts reflektierte Wellen aufzunehmen, um diese zu der Elektronik im Gehäuse zurückzuleiten, so dass ein Füllstand des Behältnisses bestimmbar ist.

Aus DE 197 03 346 A1 ist eine Parabolantenne zur Messung des Füllstands in Behältern bekannt. Zur Montage bzw. zur Demontage ist der Körper der Parabolantenne aus einzelnen Antennenelementen ausgebildet, welche zur Längsachse der Anordnung hin verschwenkbar sind, d. h. zusammenlegbar sind. Dadurch kann die Parabolantenne im zusammengelegten Zustand durch eine entsprechende Öffnung in der Behältniswandung hindurchgeführt werden. Bei dieser Anordnung führt ein einteiliges Antennenrohr mit konstantem Querschnitt von einem rückseitigen Gehäuse mit geeigneter Elektronik bis zum vorderseitigen Endabschnitt, an dem ein Mikrowellensender und Mikrowellenempfänger angeordnet ist. Von dem Mikrowellensender werden über das Antennenrohr zugeführte Wellen in Richtung des auseinandergefalteten Spiegelkörpers der Parabolantenne ausgestrahlt, um von dem Antennenkörper in Richtung eines Füllguts abgestrahlt zu werden. Vom Füllgut reflektierte Wellen werden von dem Antennenkörper zurück zum Mikrowellenempfänger gerichtet und von diesem über das Antennenrohr zurück zum Gehäuse geleitet.

Bei einer derartigen Anordnung einer Parabolantenne mit einem flachen Körper, welcher in großen Abschnitten parallel zur Schüttgutoberfläche, d. h. waagerecht oder nahezu waagerecht ausgerichtet ist, besteht das Problem, dass sich aufgewirbelte Schüttgutreste an dem Antennenkörper ablagern. Aus DE 197 03 346 A1 ist als weiteres Merkmal eine Reinigungseinrichtung zum Reinigen des Körpers der Parabolantenne mit Druckluft oder einer Reinigungsflüssigkeit bekannt. über eine Zuleitung, welche parallel zum Antennenrohr als eigenständiges Bauelement durch die Gesamtanordnung vom Außenraum in den Innenraum des Behältnisses geführt wird, werden Druckluft oder eine Reinigungsflüssigkeit zu Düsen geführt, wobei die Düsen auf die Oberfläche des Antenne- bzw. Spiegelkörpers gerichtet sind.

Diese Anordnung ist in vielfacher Hinsicht aufgrund der Vielzahl einzelner Bauelemente komplex gestaltet und weist außerdem einen großen Außenumfang auf.

Als weiterer Stand der Technik werden die US 5,926,080, die EP 0 809 324 A2 und die DE 102 42 500 A1 genannt.

Die Aufgabe der Erfindung besteht darin, einen alternativen und einfachen Aufbau für eine Fullstandmessungs-Antennenanordnung, insbesondere Füllstandmessungs-Parabolantenne für eine Fullstandmesseinrichtung vorzuschladen. Insbesondere soll der Antennenkörper von einer Behältniswandung beabstandet angeordnet werden können. Vorzugsweise soll die Anordnung auch eine Kühlung der einzelnen Elemente ermöglichen.

Diese Aufgabe wird durch eine Füllstandmessungs-Antennenanordnung mit den Merkmalen des Patentanspruches 1 gelöst.

Bevorzugt wird demgemäß gemäß einer ersten bevorzugten Ausführungsform eine Füllstandmessungs-Antennenanordnung für ein Füllstandmessgerät mit einem axial verlaufenden Hohlleiter, an dem rückseitig eine Anordnung zum Erzeugen und Auswerten von elektromagnetischen Wellen anschließbar oder angeschlossen ist, einer Antenne, insbesondere Parabolantenne vorderseitig des Hohlleiters und einem Wellenadapter zum Übertragen einer solchen Welle zwischen zwei die Welle leitenden Komponenten der Anordnung zum Anpassen des Wellenübergangs zwischen den Komponenten, wobei der Wellenadapter in axialer Richtung eine Durchtrittsöffnung aufweist. Unter axialer Richtung wird die Ausbreitungsrichtung der Welle verstanden.

Gemäß einer alternativen, aber in Kombination besonders bevorzugten Ausführungsform ist demgemäß vorteilhaft eine Füllstandmessungs-Antennenanordnung für ein Füllstandmessgerät mit einem axial verlaufenden Hohlleiter, an dem rückseitig eine Anordnung zum Erzeugen und Auswerten von elektromagnetischen Wellen anschließbar oder angeschlossen ist, einer Antenne, insbesondere Parabolantenne vorderseitig des Hohlleiters, einer Befestigungsanordnung zum Befestigen der Anordnung, insbesondere des Hohlleiters an einer Behältniswandung und einem Leitungssystem zum Hindurchleiten eines Mediums, wobei das Leitungssystem zum Zuführen eines Kühlmediums zu sich erhitzenden Komponenten der Antenne ausgebildet ist.

Vorteilhafte Ausgestaltungen sind Gegenstand von abhängigen Ansprüchen.

Vorteilhaft ist insbesondere eine Anordnung, bei welcher der Wellenadapter in rückseitiger Richtung zur Durchtrittsöffnung hin sich verjüngt, insbesondere konisch zuläuft.

Vorteilhaft ist insbesondere eine Anordnung, bei welcher der Wellenadapter über eine stirnseitige vorderseitige Fläche des Hohlleiters nicht hinaustritt, insbesondere mit der stirnseitigen Fläche bündig abschließt.

Vorteilhaft ist insbesondere eine Anordnung, bei welcher der Wellenadapter zum Anpassen eines Wellenübergangs zwischen dem Hohlleiter und einem Verbindungsstück bzw. in umgekehrter Richtung ausgebildet ist.

Vorteilhaft ist insbesondere eine Anordnung, bei welcher das Verbindungsstück als Wellenleiter ausgebildet und zum Beabstanden der Antenne, insbesondere einer Parabolantenne von einer Behältnisinnenwandung dimensioniert ist.

Vorteilhaft ist insbesondere eine Anordnung, bei welcher die Durchtrittsöffnung hohl ausgebildet ist.

Vorteilhaft ist insbesondere eine Anordnung, bei welcher das Leitungssystem zum Richten des Kühlmediums auf einen Sender und/oder Empfänger und/oder auf ein Antennenrohr einer Parabolantenne als der Antenne ausgebildet ist.

Vorteilhaft ist insbesondere eine Anordnung, bei welcher das Leitungssystem von zumindest einer außenseitig einer Behältniswandung anzuordnenden Zutrittsöffnung zu zumindest einer innenseitig der Behältniswandung anzuordnenden Austrittsöffnung, insbesondere Düse führt.

Vorteilhaft ist insbesondere eine Anordnung, bei welcher das Leitungssystem durch die Wandung zumindest einer die Welle leitenden Komponente der Anordnung führt.

Vorteilhaft ist insbesondere eine Anordnung, bei welcher das Leitungssystem durch mehrere die Welle leitenden Komponenten der Anordnung führt.

Vorteilhaft ist insbesondere eine Anordnung, bei welcher das Kühlmedium gasförmig, flüssig oder fluid ist.

Vorteilhaft ist insbesondere eine Anordnung, bei welcher eine Befestigungsanordnung zum Befestigen der Füllstandmessungs-Antennenanordnung, insbesondere des Hohlleiters derart ausgebildet ist, dass die Antenne relativ zur Benältniswandung verschwenkbar ausrichtbar ist.

Ein Ausführungsbeispiel wird nachfolgend anhand der Zeichnung näher erläutert. Es zeigen:
- Fig. 1: eine Schnittdarstellung durch eine Antennenanordnung einer Füllstandmessungsantenne gemäß einer ersten Ausführungsform;
- Fig. 2: eine Schnittdarstellung durch eine Fülistandmessungsantenne gemäß einer zweiten Ausführungsform; und
- Fig. 3: eine Schnittdarstellung durch eine Ausführungsform einer Füllstandmessungsantenne mit einer Leitungsanordnung zum Zuleiten eines Kühl- und/oder Reinigungsmittels von einer Behältnisaußenseite zu dem eigentlichen Antennenkörper.

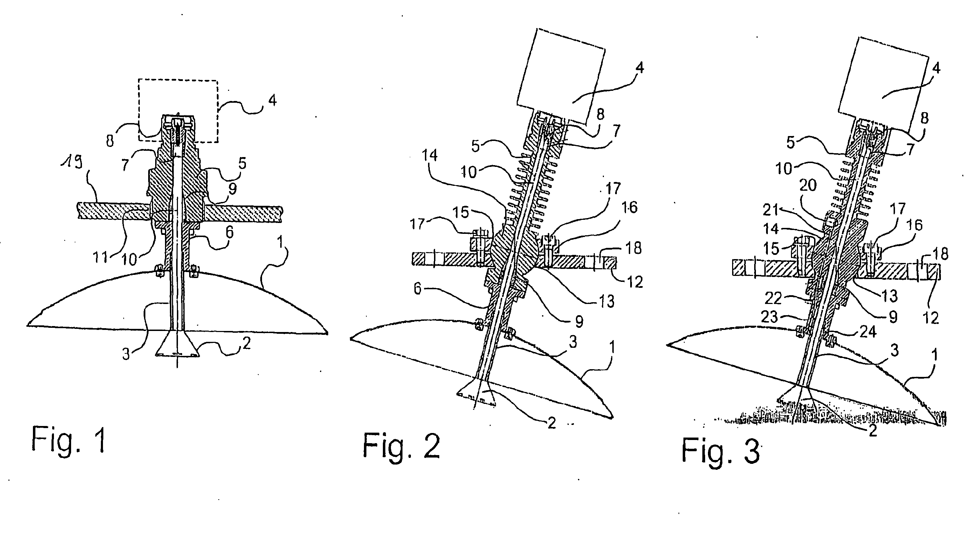

Fig. 1 zeigt beispielhaft eine Anordnung einer Füllstandmessungsantenne mit einer Parabolantenne zum Aussenden bzw. Empfangen von elektromagnetischen Wellen, insbesondere Radarwellen oder Mikrowellen. Die Parabolantenne besteht aus einem eigentlichen Antennenkörper 1, einem Antennenrohr 3 und einer Einrichtung, welche als Sender und Empfänger 2 ausgebildet ist. Der Antennenkörper 1 besteht in für sich bekannter Art und Weise aus einem Parabolspiegel und weist eine zentrale Durchtrittsöffnung auf. Durch die zentrale Durchtrittsöffnung des Antennenkörpers 1 ragt das Antennenrohr 3 in axialer Richtung hindurch. Am vorderseitigen Ende des Antennenrohrs 3 sind der Sender und Empfänger 2 angeordnet. Über das Antennenrohr 3 zum Sender und Empfänger 2 geleitete Wellen werden von dem Sender und Empfänger 2 auf den Antennenkörper 1 gerichtet und von diesem in vorderseitiger Richtung zu einem Füllgut in einem Behältnis abgestrahlt. In umgekehrter Richtung von dem Füllgut reflektierte Wellen werden von dem Antennenkörper 1 auf den Sender und Empfänger 2 gebündelt und von diesem auf das Antennenrohr 3 zur weiteren Übertragung übertragen.

Zur Erzeugung von Wellen bzw. zum Auswerten von empfangenen Wellen dient ein Gehäuse 4 mit einer entsprechenden Elektronik in für sich bekannter Art und Weise. Zur Übertragung der Wellen zwischen dem Gehäuse 4 und der Antenne 1, 2, 3 dient ein Hohlleiter 5, an dessen vorderseitigem Ende ein Verbindungselement 6 angesetzt ist, an bzw. in dessen vorderseitigem Ende das Antennenrohr 3 befestigt ist. Zur Übertragung von Wellen zwischen dem Gehäuse 4 und dem Hohlleiter 5 dienen ein Einkopplungselement 7 und ein Koaxialstecker 8 in für sich bekannter Art und Weise.

Um eine korrekte und insbesondere nicht verfälschte Übertragung von Wellen zwischen dem Hohlleiter 5 bzw. dessen Körper einerseits und dem Verbindungselement 6 andererseits zu ermöglichen, ist in dem vorderseitigen Endabschnitt des Hohlleiters 5 ein Wellenadapter 9 angeordnet. Der bevorzugte Wellenadapter 9 weist wie der Hohlleiter 5 eine axiale Durchtrittsöffnung 10 auf, welche sich mit vorzugsweise gleichem Öffnungsquerschnitt durch den Hohlleiter 5, den Wellenadapter 9, das Verbindungselement 6 und das Antennenrohr 3 erstreckt. Der Wellenadapter 9 weist bevorzugt einen zumindest teilweise konischen Verlauf auf, wobei der Wellenadapter 9 in rückseitiger Richtung, d. h. in Richtung des Gehäuses 4 konisch spitz zu der Durchtrittsöffnung 10 verjüngt zulaufend ausgebildet ist. Das vorderseitige Ende des Wellenadapters 9 ist vorzugsweise flächig und bündig mit dem flächigen Endabschnitt an der Vorderseite des Hohlleiters 5 bzw. dessen Körpers ausgebildet. Der Wellenadapter 9 besteht üblicherweise aus einem dielektrischen Material und ist so dimensioniert, dass die Wellen trotz eines verschiedenen Übertragungsmaterials von Hohlleiter 5 und Verbindungselement 6 und/oder eines verschiedenen Durchmessers und einer verschiedenen Form des Körpers des Hohlleiters 5 und des Verbindungselements 6 ungestört übertragen werden.

Sofern die axiale Durchtrittsöffnung 10 durch die dem Wellenadapter 9 benachbarten Komponenten mit einem Medium, insbesondere einem Dielektrikum gefüllt ist, kann der Abschnitt der Durchtrittsöffnung 10 im Bereich des Wellenadapters optionale ebenfalls mit diesem Medium gefüllt sein, wobei das Medium zumeist andere physikalische Eigenschaften aufweisen wird als das Material des Wellenadapters 9. Möglich ist aber auch der Einsatz eines anderen Mediums innerhalb des Wellenadapters 9 oder gar keines Mediums, d.h. Luft oder Vakuum.

Am seitlichen Umfang des Hohlleiters 5 ist in dessen vorderseitigem Abschnitt eine Befestigungsmöglichkeit zum Befestigen des Hohlleiters 5 in einer Durchtrittöffnung eines Behältnisses ausgebildet. Beim dargestellten Ausführungsbeispiel handelt es sich dabei um ein Gewinde 11, welches in ein entsprechendes Gegengewinde der Durchtrittsöffnung einer Wandung 19 des Behältnisses einschraubbar ist. Das Verbindungselement 6 ragt somit in dem eingebauten Zustand in den Innenraum des Behältnisses hinein und beabstandet dadurch den Antennenkörper 1 von einer Innenwandung des Behältnisses.

Eine zweite Ausführungsform wird anhand Fig. 2 beschrieben. Der wesentliche Unterschied zu der Anordnung gemäß Fig. 1 besteht darin, dass die Gesamtanordnung relativ zu einer Öffnung des Behältnisses verschwenkbar ist. Eine Längsachse der Gesamtanordnung ist dadurch relativ zur Behältniswandung 20 verstellbar bzw. verschwenkbar, um die Antenne möglichst gut an einen Befüllungszustand des Behältnisses anpassen zu können. Die Gesamtanordnung des Radar-Füllstandmessgeräts besteht wiederum aus einem Gehäuse 4, welches Komponenten zur Signalerzeugung und zur Signalauswertung beinhaltet. Das Gehäuse 4 ist auf dem eigentlichen Antennensystem montiert. Das Antennensystem weist wiederum einen Hohlleiter 5 auf, dessen vorderseitiger Körper außenseitig kugelförmig ausgebildet ist, d. h. einen Kugelstutzen 14 ausbildet. Eine Durchtrittsöffnung 10 erstreckt sich wiederum durch den gesamten Körper des Hohlleiters 5 einschließlich durch den Bereich des Kugelstutzens 14 und eines vorderseitigen Wellenadapters 9. Der Querschnitt der axialen Durchtrittsöffnung 10 kann, wie auch bei den anderen Ausführungsformen, insbesondere rund oder rechteckig ausgebildet sein. Ein Radarsignal wird vom Gehäuse 4 aus über einen Koaxialstecker 8 und eine Einkopplungseinrichtung 7 in den Körper des Hohlleiters 5 eingebracht und durch diesen in vorderseitiger Richtung übertragen. Vorderseitig ist an dem Körper des Hohlleiters 5 wiederum ein Verbindungsstück 7 angeordnet, wobei eine Übertragung zwischen dem Verbindungsstück 6 und dem Hohlleiter 5 wiederum durch einen vorderseitig im Körper des Hohlleiters 5 eingesetzten Wellenadapter 9 angepasst wird. Vorderseitig im Verbindungsstück 6 ist wiederum ein Antennenrohr 3 eingesetzt, welches in einem Radarwellen-Sender und Empfänger 2 endet. Der Sender und Empfänger 2 befindet sich im Brennpunkt der Parabolantenne 10 und strahlt das Radarsignal auf die Innenseite des eigentlichen Körpers der Parabolantenne 1. Diese reflektiert die Radarwelle bzw. das durch die Radarwelle ausgebildete Signal parallel zur Längsachse, insbesondere Mittenachse des Hohlleiters 5 in Richtung einer Füllgutoberfläche, von der ein Teil des Signals als Echo zurückkommt und auf dem umgekehrten Weg über die Parabolantenne 1, den Sender und Empfänger 2, das Antennenrohr 3, das Verbindungsstück 6, den Wellenadapter 9 und den Hohlleiter 5 zu der Auswerteelektronik im Gehäuse 4 zurückgeführt wird.

Wenn die Füllgutoberfläche schräg zu der Wandung 20 des Behältnisses, in welcher die Antennenanordnung befestigt ist, verläuft oder die Befestigungsteile für die Antennenanordnung bzw. das Radar-Füllstandmessgerät in Schräglage angeordnet sind, wie beispielsweise bei einem gewölbten Behälterdeckel, so wird das Echo teilweise oder ganz von der Parabolantenne 1 weg reflektiert, so dass keine oder nur eine schlechte Messung ermöglicht wird. Durch das Verschwenken der Gesamtanordnung bzw. der Längsachse der Gesamtanordnung um den Kugelstutzen 2 kann die Längsachse so ausgerichtet werden, dass diese auf eine senkrecht dazu verlaufene Füllgutoberfläche weist. Durch die Verwendung eines Kugelstutzens 14 ist vorteilhafterweise eine kegelförmiges Verschwenken der Längsachse der Antennenanordnung um den Mittelpunkt der Kugel in ausreichendem Maße ermöglicht. Die vorderseitige Oberfläche des Kugelstutzens 14 kann direkt in einer konischen, insbesondere der Kugelform angepassten Durchtrittsöffnung der Behältniswandung gelagert sein. Besonders bevorzugt wird eine Ausführungsform, bei welcher der Kugelstutzen 14 in einer Durchtrittsöffnung 13 eines Flansches 12 angeordnet ist. Zum Verspannen des Kugelstutzens 14 in dieser Durchtrittsöffnung 13 dient ein Spannflansch 16 mit ebenfalls einer entsprechenden Durchtrittsöffnung 15, deren Öffnungswandung dem rückseitigen Oberflächenverlauf des Kugelstutzens 14 angepasst ist. Der Spannflansch 16 wird beispielsweise mittels Schrauben 17 an dem Flansch 12 verschraubt. Im Fall des Einsetzens der Vorderseite des Kugelstutzens 14 direkt in einer entsprechend geformten Durchtrittsöffnung der Behältniswandung wird der Spannflansch 16 direkt gegen die Behältniswandung gespannt. Bei dem dargestellten Ausführungsbeispiel mit einem Flansch 12 weist der Flansch 12 vorteilhafterweise Durchtrittsöffnungen 18 auf, durch welche weitere Schrauben zum Verschrauben des Flansches 12 oberseitig einer entsprechenden Durchtrittsöffnung der Behältniswandung befestigbar sind. Mittels des Spannflansches 16 und gegebenenfalls eines zwischengelegten O-Rings zur Abdichtung ist der Kugelstutzen 14 und darüber die gesamte Antennenanordnung in einer optimalen Position fixierbar. Je nach Spannkraft des Spannflansches 16 bleibt die Antennenanordnung im eingebauten Zustand nach wie vor verschwenkbar oder kann auch in einer gewünschten Position fixiert werden.

Insbesondere bei einer derartigen Anordnung mit einer verschwenkbaren Antenne, insbesondere Parabolantenne 1 ist der Einsatz des Verbindungsstücks 6 vorteilhaft, um den Körper der Parabolantenne 1 ausreichend von der Behältniswandung zu beabstanden, so dass der Körper der Parabolantenne 1 beim Verschwenken der gesamten Antennenanordnung nicht gegen die innenseitige Behältniswandung stößt. Um einen störungsfreien Übergang der Wellen vom Hohlleiter 5 zum Verbindungsstück 6 bzw. in umgekehrter Richtung zu ermöglichen, wird der Hohlleiteradapter 9 entsprechend dem verwendeten Verbindungsstück, d. h. insbesondere bezüglich dessen Material und Form sowie Dimensionierung geeignet angepasst.

Die Verwendung eines solchen Hohlleiteradapters 9 ermöglicht auch die Verwendung von Komponenten wie dem Hohlleiter 5 für eine andere Antennenart, beispielsweise eine Hornantenne, für den Einsatz einer Parabolantenne 1 ohne die weiteren Komponenten wie den Hohlleiter 5 komplett neu gestalten zu müssen. Durch den Hohlleiteradapter 9 wird somit ein modularer Aufbau eines Antennensystems ermöglicht, welches neben dem Einsatz einer Hornantenne auch den Einsatz einer Parabolantenne 1 an letztendlich beliebigen weiteren Komponenten eines modularen Systems ermöglicht.

Das Verbindungsstück 6 besteht vorzugsweise aus einem rohrförmigen Körper mit jeweils einem Flansch an jedem Endabschnitt, wobei die Flansche Bohrungen bzw. Durchtrittsöffnungen zum Durchführen bzw. Einschrauben von Schrauben aufweisen. Dadurch ist das Verbindungsstück 6 an einer Stirnseite eines entsprechend ausgebildeten Körpers des Hohlleiters 5 auf der einen Seite und an einem entsprechenden Ansatzbereich der Parabolantenne 1 auf der anderen Seite anschraubbar. Dies ermöglicht insbesondere den Einsatz verschieden dimensionierter, insbesondere verschieden langer Verbindungsstücke 6. Die beiden stirnseitigen Endabschnitte der Verbindungsstücke 6 sind dabei bei einem modularen System an entsprechend geformte Gegenstücke von Hohlleitern 5 und Antennen 1 angepasst. Vorzugsweise wird auch das Antennenrohr 3 in einer Vielzahl von Dimensionierungen bereit gestellt, so dass eine Anpassung beispielsweise an verschieden groß dimensionierte Parabolantennen 1 ermöglicht wird. Durch das Vorbereiten verschiedener Trennmöglichkeiten von Verbindungsstück 6 und Antennenrohr 3 ist insbesondere auch das Montieren und Durchführen in kleine Bohrungen einer Behälterwandung und die Montage der Parabolantenne 1 von unten bzw. der Behälterinnenseite möglich.

Fig. 3 zeigt eine alternative Ausführungsform zu der in Fig. 2 dargestellten Anordnung. Zusätzlich zu den dargestellten Komponenten ist ein Leitungssystem in dem Körper des Hohlleiters 5 und des Verbindungsstückes 6 ausgebildet, welches ein flüssiges und/oder gasförmiges Medium zum Kühlen und/oder zum Reinigen von der Außenseite des Behältnisses zu der eigentlichen Antenne führen lässt.

An einen Spülanschluss 20 ist ein entsprechendes Zuführungselement für das Medium anschließbar. In dem Spülanschluss 20 beginnen eine oder mehrere Zuleitungen 21, welche durch den Körper des Hohlleiters 5 parallel zu der axialen Durchtrittsöffnung 10 hindurchführen und vorzugsweise stirnseitig an dem vorderseitigen Endabschnitt offen enden. Das Verbindungsstück 6 weist ebenfalls eine oder mehrere entsprechende Zuleitungen 22 auf, welche zu dessen vorderseitigem Bereich führen. In diesem vorderseitigen Bereich befinden sich eine oder mehrere Düsen, insbesondere eine Ringdüse 24, welche das Medium auf die Rückseite und/oder die Vorderseite der Parabolantenne 1 austreten lassen. Insbesondere ein Austritt zur Vorderseite der Parabolantenne 1 durch eine Durchtrittsöffnung, welche einen größeren Innendurchmesser hat als der Außendurchmesser des Antennenrohrs 3 wird dadurch das Medium in Richtung des Senders und Empfängers 2 gerichtet, um diesen zu kühlen und/oder zu reinigen. Eine derartige Anordnung ermöglicht somit auf einfache Art und Weise und zu dem platzsparend eine Kühlung oder gegebenenfalls eine Reinigung der Antenne und der beim Einsatz von Mikrowellen oder Radarwellen sich stark erhitzenden Komponenten einer derartigen Füllstandmessungsantenne. Alternativ kann das Leitungssystem auch aus eigenständigen Leitungen neben z. B. dem Hohlleiter ausgebildet sein.

Die Hitze des sich beim Senden sehr stark erwärmenden Senders 2 wird somit bereits am Entstehungsort gekühlt, so dass sich die entstehende Wärme nicht durch die restlichen Komponenten in Richtung des Gehäuses 4 mit der Elektronik ausbreiten kann. Durch die Anordnung einer Ringdüse 24 wird nicht nur gezielt der Sender 2, sondern auch das entsprechend durch das Medium umspülte Antennenrohr 3 gekühlt, was eine weitere Reduzierung übertragener Wärme in Richtung des rückseitigen Gehäuses 4 bewirkt. Neben eine Reduzierung der Wärme führt eine solche Kühlung sowie ein entsprechend gut dimensionierter Wellenadapter 9 auch zu einem geringeren Leistungsverlust.

Soweit einzelne Komponenten unter Bezug auf ein bestimmtes Ausführungsbeispiel beschrieben sind, dient dies nicht im beschränkenden Sinne, sondern lediglich beispielhaft. Vorteilhafterweise sind die verschiedenen Komponenten der einzelnen dargestellten Ausführungsformen untereinander austauschbar und auch mit anderen geeigneten weiteren Komponenten für sich bekannter Antennenanordnungen kombinierbar.

## Patentansprüche

1. Füllstandmessungs-Antennenanordnung für ein Füllstandmessgerät mit
- einem axial verlaufenden Hohlleiter (5), an dem rückseitig eine Anordnung (4) zum Erzeugen und Auswerten von elektromagnetischen Wellen anschließbar oder angeschlossen ist,
- einer Antenne, insbesondere Parabolantenne (1 - 3) vorderseitig des Hohlleiters (5) und
- einem Wellenadapter (9) zum Übertragen einer solchen Welle zwischen zwei die Welle leitenden Komponenten der Anordnung zum Anpassen des Wellenübergangs zwischen den Komponenten, **dadurch gekennzeichnet, dass**
- der wellenadapter (9) in axialer Richtung eine Durchtrittsöffnung (10) aufweist.

2. Anordnung nach Anspruch 1, bei welcher der Wellenadapter (9) in rückseitiger Richtung zur Durchtrittsöffnung (10) hin sich verjüngt, insbesondere konisch zuläuft.

3. Anordnung nach Anspruch 1 oder 2, bei welcher der Wellenadapter (9) über eine stirnseitige vorderseitige Flache des Hohlleiters (5) nicht hinaustritt, insbesondere mit der stirnseitigen Fläche bündig abschließt.

4. Anordnung nach einem vorstehenden Anspruch, bei welcher der Wellenadapter (9) zum Anpassen eines Wellenübergangs zwischen dem Hohlleiter (5) und einem Verbindungsstück (6) bzw. in umgekehrter Richtung ausgebildet ist.

5. Anordnung nach Anspruch 4, bei welcher das Verbindungsstück (6) als Wellenleiter ausgebildet und zum Beabstanden der Antenne.(1 - 3), insbesondere einer Parabolantenne von einer Behältnisinnenwandung dimensioniert ist.

6. Anordnung nach einem vorstehenden Anspruch, bei welcher die Durchtrittsöffnung (10) hohl ausgebildet ist.

7. Füllstandmessungs-Antennenanordnung nach einem vorstehenden Anspruch, mit
,
- einer Befestigungsanordnung zum Befestigen der Anordnung, insbesondere des Hohlleiters (5) an einer Behältniswandung (20) und
- einem Leitungssystem zum Hindurchleiten eines Mediums, wobei
- das Leitungssystem (20 - 24) zum Zuführen eines Kühlmediums zu sich erhitzenden Komponenten (2, 3) der Antenne ausgebildet ist.

8. Anordnung nach Anspruch 7, bei welcher das Leitungssystem (20 - 24) zum Richten des Kühlmediums auf einen Sender und/oder Empfänger (2) und/oder auf ein Antennenrohr (3) einer Parabolantenne als der Antenne ausgebildet ist.

9. Anordnung nach Anspruch 7 oder 8, bei welcher das Leitungssystem von zumindest einer außenseitig einer Behältniswandung anzuordnenden Zutrittsöffnung (20) zu zumindest einer innenseitig der Behältniswandung anzuordnenden Austrittsöffnung, insbesondere Düse (24) führt.

10. Anordnung nach Anspruch 7, 8 oder 9, bei welcher das Leitungssystem durch die Wandung zumindest einer die Welle leitenden Komponente (5, 14, 6) der Anordnung führt.

11. Anordnung nach Anspruch 9 oder 10, bei welcher das Leitungssystem durch mehrere die Welle leitenden Komponenten (5, 14, 6) der Anordnung führt.

12. Anordnung nach einem der Ansprüche 7 - 11, bei welcher das Kühlmedium gasförmig, flüssig oder fluid ist.

13. Anordnung nach einem vorstehenden Anspruch, bei welcher eine Befestigungsanordnung zum Befestigen der Füllstandmessungs-Antennenanordnung, insbesondere des Hohlleiters (5) derart ausgebildet ist, dass die Antenne relativ zur Behältniswandung verschwenkbar ausrichtbar ist.

## Claims

1. A filling level measurement aerial arrangement for a filling level measurement instrument with
- an axially extending hollow wave guide (5) to which an arrangement (4) for the generation and evaluation of electromagnetic waves is capable of being attached or is attached at the rear,
- an aerial, in particular a parabolic aerial (1 to 3) at the front of the hollow wave guide (5), and
- a wave adapter (9) for transmitting a wave of this type between two components of the arrangement conducting the wave in order to adapt the wave transition between the components,
**characterized in that**
- the wave adapter (9) has a passage opening (10) in the axial direction.

2. An arrangement according to claim 1, in which the wave adapter (9) tapers, in particular converges in a conical manner, in the rear direction towards the passage opening (10).

3. An arrangement according to claim 1 or 2, in which the wave adapter (9) does not extend out beyond a front face of the hollow wave guide (5) at the front, and in particular terminates flush with the front end face.

4. An arrangement according to any preceding claim, in which the wave adapter (9) is designed to adapt a wave transition between the hollow wave guide (5) and a connecting member (6) or in the reverse direction.

5. An arrangement according to claim 4, in which the connecting member (6) is designed in the form of a wave guide and is dimensioned so as to keep the aerial (1 to 3), in particular a parabolic aerial, at a distance from an inner wall of the container.

6. An arrangement according to any preceding claim, in which the passage opening (10) is made hollow.

7. A filling level measurement aerial arrangement according to any preceding claim, with
- a fastening arrangement for fastening the arrangement, in particular the hollow wave guide (5) to a container wall (20) and
- a line system for the passage of a medium,
wherein
- the line system (20 to 24) is designed to supply a cooling medium to components (2, 3) of the aerial which heat up.

8. An arrangement according to claim 7, in which the line system (20 to 24) is designed to direct the cooling medium to a transmitter and/or receiver (2) and/or to an aerial tube (3) of a parabolic aerial as the aerial.

9. An arrangement according to claim 7 or 8, in which the line system leads from at least one entry opening (20) to be arranged on the outside of a container wall to at least one outlet opening, in particular a nozzle, (24) to be arranged on the inside of the container wall.

10. An arrangement according to claim 7, 8 or 9, in which the line system leads through the wall of at least one component (5, 14, 6) of the arrangement guiding the wave.

11. An arrangement according to claim 9 or 10, in which the line system leads through a plurality of components (5, 14, 6) of the arrangement guiding the wave.

12. An arrangement according to any one of claims 7 to 11, in which the cooling medium is gaseous, liquid or fluid.

13. An arrangement according to any preceding claim, in which a fastening arrangement for fastening the filling level measurement aerial arrangement, in particular the hollow wave guide (5), is designed in such a way that the aerial is capable of being orientated in a pivoting manner relative to the container wall.

## Revendications

1. Dispositif d'antenne de mesure d'un niveau pour un appareil de mesure de niveau comprenant :
- un guide d'onde (5) dirigé axialement, dont le côté arrière est relié ou peut être relié à un dispositif (4) générant et exploitant des ondes électromagnétiques,
- une antenne, notamment une antenne parabolique (1-3) située sur le côté avant du guide d'onde (5), et
- un adaptateur d'onde (9) pour transmettre une telle onde entre deux composants guides d'onde du dispositif pour adapter le passage de l'onde entre les composants, dispositif **caractérisé en ce que** l'adaptateur d'onde (9) comporte un orifice de passage(10) dans la direction axiale.

2. Dispositif selon la revendication 1,
dans lequel
l'adaptateur d'onde (9) va en s'amincissant en direction du côté arrière vers l'orifice de passage (10) et a notamment une forme conique.

3. Dispositif selon la revendication 1 ou 2,
dans lequel
l'adaptateur d'onde (9) ne s'étend pas au-delà d'une surface frontale située côté avant du guide d'onde (5) mais s'aligne en particulier exactement avec cette surface frontale.

4. Dispositif selon l'une des revendications précédentes,
dans lequel
l'adaptateur d'onde (9) est réalisé pour adapter le passage de l'onde entre le guide d'onde (5) et une pièce de liaison (6) ou en sens inverse.

5. Dispositif selon la revendication 4,
dans lequel
la pièce de liaison (6) est réalisée sous la forme d'un guide d'onde et est dimensionnée pour écarter l'antenne (1-3), notamment une antenne parabolique d'une paroi intérieure de l'enveloppe.

6. Dispositif selon l'une des revendications précédentes,
dans lequel
l'orifice de passage (10) est creux.

7. Dispositif selon l'une des revendications précédentes, comportant :
- un dispositif de fixation pour fixer le dispositif, notamment le guide d'onde (5) à une paroi enveloppe (20), et
- un système de conduite pour le passage d'un milieu,
- ce système de conduite (20-24) étant réalisé pour fournir un milieu de refroidissement aux composants (2, 3) de l'antenne qui s'échauffent.

8. Dispositif selon la revendication 7,
dans lequel
le système de conduite (20-24) est réalisé pour diriger le milieu de refroidissement sur un émetteur et/ou un récepteur (2) et/ou un tube antenne (3) d'une antenne parabolique constituant l'antenne.

9. Dispositif selon la revendication 7 ou 8,
dans lequel
le système de conduite relie un orifice d'arrivée (20) associé au côté extérieur d'une paroi enveloppe à au moins un orifice de sortie, notamment une buse (24) associée au côté intérieur de la paroi enveloppe.

10. Dispositif selon la revendication 7, 8 ou 9,
dans lequel
le système de conduite traverse la paroi d'au moins un composant (5, 14, 6) guidant l'onde du dispositif.

11. Dispositif selon la revendication 9 ou 10,
dans lequel
le système de conduite passe dans plusieurs composants (5, 14, 6) du dispositif guidant l'onde.

12. Dispositif selon l'une des revendications 7-11,
dans lequel
le milieu de refroidissement est un milieu gazeux, liquide ou fluide.

13. Dispositif selon l'une des revendications précédentes,
dans lequel
un dispositif de fixation pour fixer le dispositif d'antenne de mesure de niveau, notamment le guide d'onde (5), est réalisé pour que l'antenne puisse être alignée de manière pivotante par rapport à la paroi enveloppe.
